# EUROPEAN PATENT APPLICATION

(11) **EP 2 891 869 A1**
(43) Date of publication of application: **08.07.2015**
(21) Application number: 14150058.7
(22) Date of filing: 02.01.2014
(51) Int. Cl.: G01L 3/04, B62M 6/50, G01L 3/14, G01L 5/13

(54) **Torque Measuring Device for Electromotive Chainless Bicycles**

(71) Applicant: NEW KAILUNG GEAR CO., LTD., Kaohsiung (TW)
(72) Inventor: Liu, Jen-Chih, Kaohsiung (CN)
(74) Representative: Treeby, Philip David William

(57) **Abstract**

A torque measuring device for an electromotive chainless bicycle is provided. The bicycle comprises a power transfer shaft between the crank assembly and a passive gear of a hub of a rear wheel, a motor for providing auxiliary power, and a torque measuring device for measuring output torque of the motor. The torque measuring device is installed on the power transfer shaft which is a rearmost section of power transfer of the bicycle so as to measure and control the output torque of the motor. The power transfer shaft is divided into two parts; a front part is a power output unit, which can output a torque from the crank; and a rear part is a transfer unit for transfer torque to a rear wheel for driving the rear wheel; and the torque measuring device is arranged between the power output unit and the transfer unit.

## Description

### FIELD OF THE INVENTION

The present invention relates to the measurement of torque, and in particular to a torque measuring device for electromotive chainless bicycles.

### BACKGROUND OF THE INVENTION

Current power transfer of bicycles have forms, one uses a chain for power transfer, and another is chainless. The trading power of a driver upon the crank of a bicycle for driving a bicycle is transferred to the rear wheel by using a chain or by a chainless form.

As a bicycle moves, the driver will feel tired because of variation of topography or physical strength of the driver applied to the biycle. Therefore, a motor assistant bicycle is developed for chain-used bicycles. However, in this kind of bicycles, a torque measuring device is used for measuring the output torque of the motor that the output torque of the motor is controllable.

However, the prior art torque measuring device is only suitable for the chain used bicycles, which measures the trading force and output torque of the motor. The torque measuring device is installed to the shaft of the crank of the bicycle. But currently, no torque measuring device is suitable for chainless bicycles.

Therefore, there is an eager demand for a novel design which is suitable for chainless bicycles.

### SUMMARY OF THE INVENTION

Accordingly, the object of the present invention is to provide a novel device which can improve the aforementioned defects as said above, the present invention provides a torque measuring device for an electromotive chainless bicycle; wherein the torque of a chainless bicycle can be detected precisely. Due to the torque measuring device of the present invention installed directly on the power transfer shaft, the torque of the power transfer shaft can be captured directly. Therefore, the electromotive system can precisely control the output torque from a motor to the power transfer shaft. The present invention has a high usability and is economic; only less parts are used so that the space occupied is small and the cost is low.

To achieve above object, the present invention provides a torque measuring device for an electromotive chainless bicycle, wherein the bicycle comprising a frame, a crank assembly, a crank, a power transfer shaft between the crank assembly and a passive gear of a hub of a rear wheel, a motor for providing auxiliary power, and a torque measuring device for measuring output torque of the motor; wherein the torque measuring device is installed on the power transfer shaft for measuring torques of the power transfer shaft which is a rearmost section of power transfer of the bicycle so as to measure and control the output torque of the motor. The torque measuring device is installed on the power transfer shaft; the power transfer shaft is divided into two parts; a front part is a power output unit, which can output a torque from the crank; and a rear part is a transfer unit for transfer torque to a rear wheel for driving the rear wheel; and the torque measuring device is arranged between the power output unit and the transfer unit.

### BRIEF DESCRIPTION OF THE DRAWINGS:

Fig. 1 is a schematic view about a chainless bicycle used in the present invention.
Fig. 2 shows an embodiment about an axial separation form torque measuring device according to the present invention.
Fig. 3 shows an embodiment about a radial separation form torque measuring device according to the present invention.
Fig. 4 shows an embodiment about an integrated axial separation form torque measuring device according to the present invention.
Fig. 5 shows an embodiment about an axial separation form torque measuring device according to the present invention, wherein a torque rod is used.
Fig. 6 shows an embodiment about an integrated radial separation form torque measuring device according to the present invention.
Fig. 7 shows an embodiment about an axial separation form torque measuring device according to the present invention, wherein a torque spring is used.

### DETAILED DESCRIPTION OF THE IVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

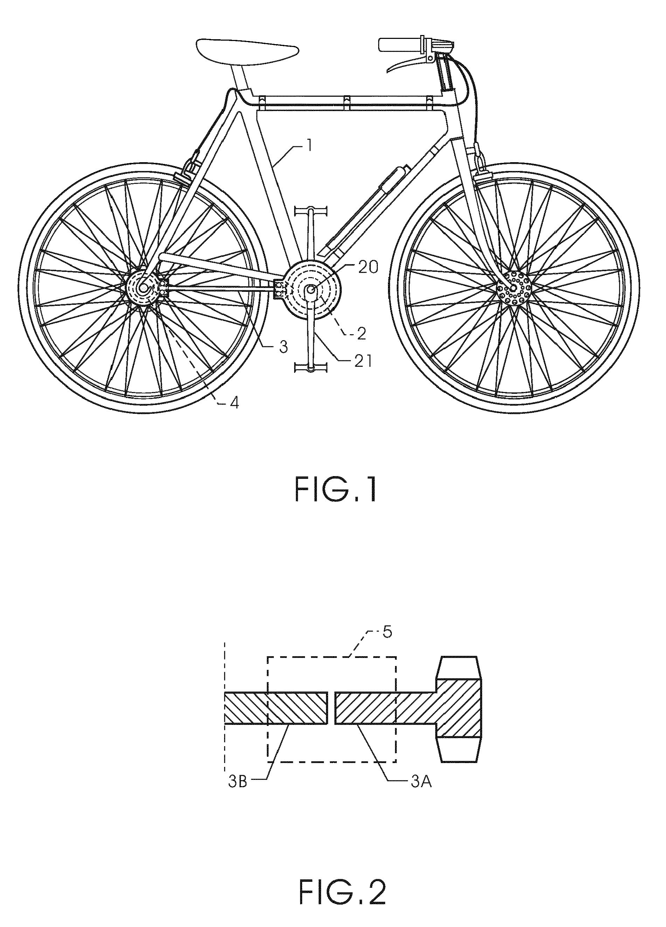

With reference to Figs. 1 to 7, the torque measuring device of the present invention is illustrated. In the present invention, a torque measuring device for measuring the output torque of a control motor is installed on the power transfer shaft directly for measuring the variation of the torque of the power output shaft. Furthermore, the uncontrolled factors in control of an electromotive system are reduced so that the output torque of the motor is measured precisely.

A chainless bicycle is illustrated. The bicycle includes a frame 1, a crank assembly 2, a crank 21 and a power transfer shaft 3 between the crank assembly 2 and the driven gear 4 of a hub of a rear wheel. As illustrated in Fig. 2, a torque measuring device 5 of the present invention is arranged on a power transfer shaft 3. The transfer shaft 3 is divided into two parts. A front part is a power output unit 3A, which can output a torque from the crank 21. A rear part is a transfer unit 3B for transfer torque to a rear wheel for driving the rear wheel. The torque measuring device 5 is arranged between the power output unit 3A and the transfer unit 3B.

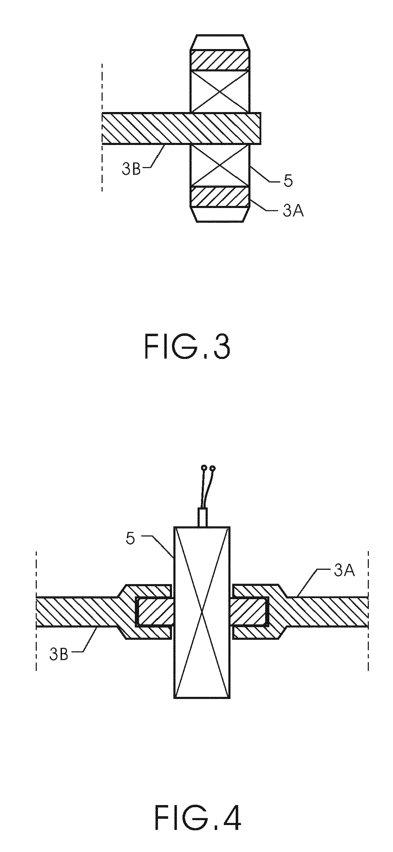

The torque measuring device 5 may have a form of axial separation and radial separation based on the form of the separation of the transfer shaft 3. Fig. 2 shows an axial separation form torque measuring device 5. As illustrated in Fig. 3, a radial separation from torque measuring device 5 of the present invention is illustrated. In this form, the power output unit 3A and the transfer unit 3B are separated radially. The torque measuring device 5 is installed in an axial gap between the power output unit 3A and the transfer unit 3B.

With reference to Fig. 4, an axial form torque measuring device 5 according to the present invention is illustrated. It is illustrated that the torque measuring device 5 is arranged between the power output unit 3A and the transfer unit 3B.

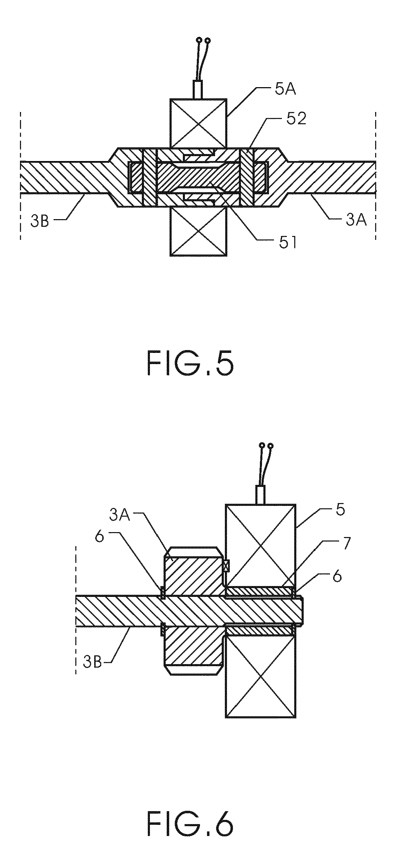

With reference to Fig. 5, the torque measuring device 5 of the present invention includes a torque rod 51 and an angle displacement torque measure unit 5A. Two ends of the torque rod 51 are connected to the power output unit 3A and the transfer unit 3B by using respective pins 52.

With reference to Fig. 6, the radial form torque measuring device 5 according to the present invention is illustrated. It is illustrated that the power output unit 3A is radially arranged to be around the transfer unit 3B by using a C buckle 6 at a rear side thereof. Then a power output sensor 7 radially encloses a front end of the transfer unit 3B. Another C buckle 6 is installed in a front side of the power output sensor 7 for retaining the power output sensor 7 to the transfer unit 3B. Then the torque measuring device 5 radially encloses the transfer unit 3B.

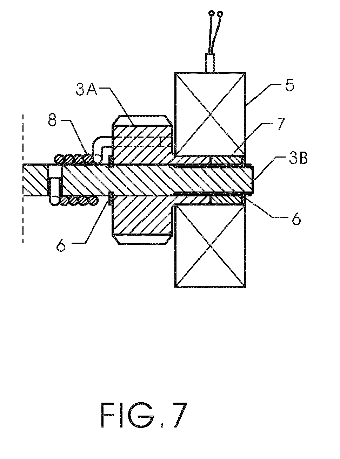

As illustrated in Fig. 7, the torque measuring device 5 is radially arranged around the power output unit 3A and the transfer unit 3B. It is illustrated that the power output unit 3A is radially arranged to be around the transfer unit 3B by using a C buckle 6 at a rear side thereof. Then a power output sensor 7 radially encloses a front end of the transfer unit 3B. Another C buckle 6 is installed in a front side of the power output sensor 7 for retaining the power output sensor 7 to the transfer unit 3B. Then the torque measuring device 5 radially encloses the transfer unit 3B and a part of the power output unit 3A. A helical spring 8 is installed between a rear side of the power output unit 3A and a rear section of the transfer unit 3B.

By using the structure of the present invention, since the torque measuring device 5 of the present invention is installed directly on the power transfer shaft 3, the torque at the rear end of the power transfer shaft can be captured directly. Therefore, the electromotive system can precisely control the output torque from a motor to the power transfer shaft.

Advantages of the present invention are that: the torque of a chainless bicycle can be measured precisely; due to the torque measuring device of the present invention installed directly on the power transfer shaft, the torque of the power transfer shaft can be captured directly. Therefore, the electromotive system can precisely control the output torque from a motor to the power transfer shaft; the present invention has a high usability and is economic; only less parts are used so that the space occupied is small and the cost is low.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A torque measuring device for an electromotive chainless bicycle; the bicycle comprising a frame (1), a crank assembly (2), a crank (21), a power transfer shaft (3) between the crank assembly (2) and a passive gear (4) of a hub of a rear wheel, a motor for providing auxiliary power, and a torque measuring device (5) for measuring output torque of the motor; wherein the torque measuring device (5) is installed on the power transfer shaft (3) for measuring torques of the power transfer shaft (3) which is a rearmost section of power transfer of the bicycle so as to measure and control the output torque of the motor.

2. The torque measuring device for an electromotive chainless bicycle; as claimed in claim 1, wherein the torque measuring device (5) is installed on the power transfer shaft (3); the power transfer shaft (3) is divided into two parts; a front part is a power output unit (3A), which can output a torque from the crank (21); and a rear part is a transfer unit (3B) for transfer torque to a rear wheel for driving the rear wheel; and the torque measuring device (5) is arranged between the power output unit (3A) and the transfer unit (3B).

3. The torque measuring device for an electromotive chainless bicycle; as claimed in claim 2, wherein the power output unit (3A) is axially separated from the transfer unit (3B).

4. The torque measuring device for an electromotive chainless bicycle; as claimed in claim 3, wherein the torque measuring device (5) is installed between the power output unit (3A) and the transfer unit (3B).

5. The torque measuring device for an electromotive chainless bicycle; as claimed in claim 2, wherein the power output unit (3A) is axially separated from the transfer unit (3B); the torque measuring device (5) includes a torque rod (51) and an angle displacement torque measure unit (5A); two ends of the torque rod (51) are connected to the power output unit (3A) and the transfer unit (3B) by using respective pins (52).

6. The torque measuring device for an electromotive chainless bicycle as claimed in claim 2, wherein the power output unit (3A) is radially separated from the transfer unit (3B).

7. The torque measuring device for an electromotive chainless bicycle as claimed in claim 6, wherein the power output unit (3A) and the transfer unit (3B) are radially separated from one another and the torque measuring device (5) is installed between the power output unit (3A) and the transfer unit(3B).

8. The torque measuring device for an electromotive chainless bicycle as claimed in claim 6, wherein the power output unit (3A) is radially arranged to be around the transfer unit by using a C buckle (6) at a rear side thereof; then a power output sensor (7) radially encloses a front end of the transfer unit(3B); another C buckle (6) is installed in a front side of the power output sensor (7) for retaining the power output sensor (7) to the transfer unit (3B); and then the torque measuring device (5) radially encloses the transfer unit(3B).

9. The torque measuring device for an electromotive chainless bicycle; as claimed in claim 6, wherein the power output unit (3A) is radially arranged to be around the transfer unit (3B) by using a C buckle (6) at a rear side thereof; then a power output sensor (7) radially encloses a front end of the transfer unit (3B); another C buckle (6) is installed in a front side of the power output sensor (7) for retaining the power output sensor (7) to the transfer unit (3B); then the torque measuring device (5) radially encloses the transfer unit (3B) and a part of the power output unit (3A); and a helical spring (8) is installed between a rear side of the power output unit (3A) and a rear section of the transfer unit (3B).
